# EUROPÄISCHE PATENTANMELDUNG

(11) **EP 0 721 916 A1**
(43) Veröffentlichungstag der Anmeldung: **17.07.1996**
(21) Anmeldenummer: 95119368.9
(22) Anmeldetag: 08.12.1995
(51) Int. Cl.: C01B 7/07

(54) **Verfahren zur Abtrennung von HF aus Salzsäure**

(30) Priorität: 13.01.1995 DE 19500785
(71) Anmelder: METALLGESELLSCHAFT AG, D-60323 Frankfurt am Main (DE)
(72) Erfinder: Mayer-Schwinning, Gernot, D-61352 Bad Homburg (DE); Herden, Hansjörg, Dr., D-63110 Rodgau (DE); Ruhl, Emil, Dr., D-60431 Frankfurt am Main (DE)

(57) **Zusammenfassung**

Es wird ein Verfahren zur Abtrennung von HF aus Salzsäure beschrieben, bei dem die mit HF verunreinigte Salzsäure verdampft und die verdampfte Salzsäure durch einen Festbettreaktor geleitet wird, dessen Festbett aus mindestens einem natürlich vorkommenden Zeolith besteht, und daß die aus dem Festbettreaktor austretende dampfförmige Salzsäure kondensiert wird und ein Teilstrom des Kondensats in den Festbettreaktor und anschließend in die zu verdampfende verunreinigte Salzsäure zurückfließt.

## Beschreibung

Die Erfindung bezieht sich auf ein Verfahren zur Abtrennung von HF aus Salzsäure.

In der chemischen Industrie sowie bei der Reinigung von Abgasen, insbesondere bei der Reinigung von Abgasen aus Müllverbrennungsanlagen, fällt in großen Mengen Salzsäure an, die mit HF verunreinigt ist. Diese Salzsäure, die in der Regel aus 6 bis 19 Gew.-% HCl, 0,01 bis 1 Gew.-% HF und Rest Wasser besteht sowie Feststoffteilchen in unterschiedlicher Menge enthält, muß vor ihrer Wiederverwendung weitgehend von HF befreit werden. Aus der verunreinigten Salzsäure sind außerdem die evtl. vorhandenen Feststoffpartikel abzutrennen.

Es sind bereits mehrere Verfahren bekannt, bei denen HF aus Salzsäure mit dem Ziel abgetrennt wird, die Salzsäure problemlos wiederverwenden zu können. So schlägt die DE-PS 10 36 825 ein Verfahren zur Abtrennung von Salzsäure aus einem Salzsäure und Fluorverbindungen enthaltenden gasförmigen oder flüssigen Gemisch vor, bei dem das Gemisch mit einem in wäßriger salzsäurelösung gelösten Ausscheidungsmittel in Kontakt gebracht und das HCl hierauf aus der Flüssigkeit verdampft wird. Als Ausscheidungsmittel wird bei diesem Verfahren ein Aluminiumchlorid oder ein Aluminium-Chlorid-Fluorid-Komplex eingesetzt. Das Ausscheidungmittel wird in solcher Menge verwendet, daß ein wesentlicher Teil des an das Aluminium gebundenen Fluors in den Verdampfungsrückständen zurückbleibt. Aus der DE-OS 41 10 177 ist ein Verfahren zur Reinigung einer mit HF und Fluoriden verunreinigten verdünnten Salzsäure bekannt, bei dem die rohe verdünnte Salzsäure zur Abtrennung von HF und Fluoriden mit einem stöchiometrischen Überschuß wenigstens eines löslichen Chlorides versetzt wird, das den in der Salzsäure vorliegenden Fluoridgehalt wenigstens zum größten Teil in einen unlöslichen Niederschlag überführt, bei dem der sich bildende unlösliche Niederschlag noch während der Fällungsreaktion aus der Reaktionslösung entfernt wird und bei dem die vom Niederschlag befreite Hauptmenge der verdünnten Salzsäure anschließend einer Weiterverarbeitung durch Destillation und/oder Rektifikation zugeführt wird. Als lösliche Chloride werden bei diesem Verfahren CaCl₂, MgCl₂ oder AlCl₃, ggf. gemeinsam mit einem Alkalichlorid, verwendet. Die Umsetzung mit den löslichen Chloriden wird bei Temperaturen im Bereich von 20 bis 120°C durchgeführt. Auch die EP-OS 0 425 922 offenbart ein Verfahren zur Reinigung und Aufkonzentrierung von verdünnter, mit Schwermetallen und HF verunreinigter Salzsäure, insbesondere aus der Rauchgaswäsche von Müllverbrennungsanlagen, bei dem die verunreinigte, verdünnte Salzsäure einem thermischen Trennprozeß unter Zusatz von gelösten fluoridbindenden Zusätzen unterworfen wird, wobei die Zusätze gleichzeitig wasserbindend sind. Nach diesem Verfahren werden als fluoridbindende Zusätze MgCl₂, CaCl₂, AlCl₃, Borsäure oder Gemische dieser Stoffe verwendet. Die Destillation erfolgt in zwei Stufen mit unterschiedlichem Druckniveau.

Aus der DE-OS 1 467 030 ist ein Verfahren zur Entfernung kleiner Mengen HF aus Chlorwasserstoff bekannt, bei dem das Gas bei Raumtemperatur über Aluminiumoxid und/oder Aluminiumhydroxid geleitet wird. Das Verfahren wird bei Normaldruck und Normaltemperatur ohne Anwendung von Wasser durchgeführt; das Verfahren wird also lediglich zur HF-Abtrennung aus trockenem HCl-Gas eingesetzt.

Im Gegensatz zu den bisher zitierten Druckschriften, in denen die Abtrennung des HF aus Salzsäure durch eine chemische Reaktion des HF bewirkt wird, schlägt die EP-OS 0 582 914 ein Verfahren zur Gewinnung von reiner, konzentrierter Salzsäure aus Abwasser, vorzugsweise aus der Rauchgaswäsche von Müllverbrennungsanlagen, durch Destillation des Abwassers in mehreren Destillationskolonnen, einschließlich einer Kolonne zur Entfernung von Flußsäure und Bromwasserstoffsäure aus der azeotropen und noch mit schwersiedenden Komponenten beladenen Salzsäure vor. Um eine Reduzierung von Flußsäure und Bromwasserstoffsäure bis in den Bereich von 10 ppm bei gleichzeitiger Minimierung des Energieaufwandes zu ermöglichen, wird der aus einer zusätzlichen HF/HBr-Kolonne ausströmende Kopfstrom in mindestens zwei Teilströme aufgeteilt, von denen ein Teilstrom der nachfolgenden Kolonne und ein Teilstrom unmittelbar dem dieser Kolonne nachgeschalteten Absorber zugeführt wird.

Der Erfindung liegt die Aufgabe zugrunde, ein Verfahren zur Abtrennung von HF aus Salzsäure bereitzustellen, das insbesondere zur Reinigung verdünnter Salzsäure anwendbar ist, eine Salzsäure mit einem HF-Gehalt < 10 mg HF pro Liter Salzsäure liefert und wirtschaftlich arbeitet sowie betriebssicher ist.

Die der Erfindung zugrundeliegende Aufgabe wird dadurch gelöst, daß die mit HF verunreinigte Salzsäure verdampft und die verdampfte Salzsäure durch einen Festbettreaktor geleitet wird, dessen Festbett aus mindestens einem natürlich vorkommenden Zeolith besteht, und daß die aus dem Festbettreaktor austretende dampfförmige Salzsäure kondensiert wird und ein Teilstrom des Kondensats in den Festbettreaktor und anschließend in die zu verdampfende verunreinigte Salzsäure zurückfließt.

Das erfindungsgemäße Verfahren kann vorteilhaft kontinuierlich betrieben werden und ist wegen der Verwendung natürlich vorkommender und preiswerter Zeolithe besonders wirtschaftlich. Das Festbett wird durch den ständigen Salzsäure-Rückfluß von den Reaktionsprodukten befreit, die bei der Umsetzung von HF mit Zeolithen in Gegenwart von Wasser entstehen, so daß sich während des Betriebs des Festbetts die innere Oberfläche sogar vergrößert. Diese Tatsache bewirkt in vorteilhafter Weise eine nahezu konstante Reinigungsleistung des Verfahrens über eine lange Betriebszeit. Beispielsweise vergrößert sich die innere Oberfläche der Zeolithe während der Reaktion mit HF von 40 m²/g auf 180 m²/g. Eine Bildung von SiF₄ wurde beim erfindungsgemäßen Verfahren nicht beobachtet, obwohl die natürlich vorkommenden Zeolithe einen geringen Anteil SiO₂, insbesondere in Form von Alumosilikaten, enthalten. Die mit dem erfindungsgemäßen Verfahren produzierte gereinigte Salzsäure hat einen HF-Gehalt < 10 mg/l bzw. < 0,001 Gew.-%, der mit Sicherheit eingehalten werden kann und der in der Regel nur bei 1 bis 5 mg HF pro Liter Salzsäure liegt.

Nach der Erfindung ist ferner vorgesehen, daß mit HF verunreinigte Salzsäure, die einen HCl-Gehalt von 6 bis 19 Gew.-% hat, nach ihrer Verdampfung und Kondensation durch Destillation und/oder Rektifikation bis zum Azeotrop mit einem HCl-Gehalt von ca. 20 Gew.-% aufkonzentriert wird. Die Aufkonzentrierung der Salzsäure nach der Abscheidung von HF wird durchgeführt, um die verdünnte Säure in eine wiederverwendbare, verkaufsfähige Form zu überführen.

Alternativ ist nach der Erfindung vorgesehen, daß mit HF verunreinigte Salzsäure, die einen HCl-Gehalt von 6 bis 19 Gew.-% hat, nach ihrer Verdampfung und Kondensation durch Destillation und/oder Rektifikation in Gegenwart einer ca. 30 bis 60 Gew.-% CaCl₂ enthaltenden Lösung bis zu einer Salzsäure mit einem HCl-Gehalt > 30 Gew.-% aufkonzentriert wird. Durch die Anwesenheit einer hochkonzentrierten CaCl₂-Lösung während der Destillation und/oder Rektifikation der verdünnten und von HF befreiten Salzsäure kann eine Salzsäure hergestellt werden, deren HCl-Gehalt über dem des Azeotrops liegt und > 30 Gew.-% beträgt. Diese konzentrierte Salzsäure ist wegen ihrer hohen Reinheit in vorteilhafter Weise ein gut verkäufliches Produkt.

In weiterer Ausgestaltung der Erfindung ist vorgesehen, daß das Festbett eine Höhe von 1 bis 5 m hat und die Festbett-Teilchen einen mittleren Durchmesser d₅₀ von 0,5 bis 2 cm aufweisen. Ein derartiges Festbett verursacht lediglich einen vergleichsweise geringen Druckverlust, der aus wirtschaftlicher Sicht toleriert werden kann. Außerdem werden sowohl die Standzeit als auch der Druckverlust des Festbettes durch die chemische Umsetzung von HF mit Zeolithen über einen längeren Zeitraum kaum verändert. Im Festbett werden 20 bis 30 g Zeolith pro l zu reinigender Salzsäure benötigt, und nach erfolgter Reinigung der Salzsäuremenge wird das Festbett mit einer neuen Zeolithfüllung beschickt. Die dem Festbett entnommenen Zeolithe können vorteilhaft zur adsorptiven Entfernung von Schadstoffen aus Abgasen eingesetzt werden, da sie eine hohe innere Oberfläche haben.

Nach der Erfindung ist es besonders vorteilhaft, wenn als natürlich vorkommender Zeolith Mordenit, Clinoptilolit, Chabasit oder ein aus zwei oder drei dieser Stoffe bestehendes Gemisch verwendet wird. Als besonders geeignet hat sich ein Gemisch erwiesen, das aus 10 bis 20 Gew.-% Mordenit, 60 bis 70 Gew.-% Clinoptilolit, 0 bis 5 Gew.-% Chabasit und Rest SiO₂ besteht, wobei der SiO₂-Gehalt < 3 Gew.-% sein sollte. Die natürlich vorkommenden Zeolithe, insbesondere Mordenit, Clinoptilolit und Chabasit, bestehen aus Aluminiumsilikaten, deren Aluminiumoxidanteil bevorzugt mit HF unter Bildung von AlF₃ oder AlOF reagiert. Diese Fluorverbindungen werden durch den Salzsäure-Rückfluß von den zeolithischen Feststoffteilchen "abgewaschen". Die chemische Reaktion der Zeolithe mit HF verändert ihre Reaktivität gegenüber HF nicht, denn durch den Waschvorgang wird dem HF ständig eine neue reaktive Oberfläche angeboten, zumal sich auch die innere Oberfläche der Zeolithe während des Reinigungsprozesses nicht nachteilig verändert. Die Bildung von SiF₄ durch Reaktion des gebundenen und freien SiO₂ mit HF wurde nicht festgestellt.

Beim erfindungsgemäßen Verfahren ist es besonders vorteilhaft, wenn im Festbettreaktor das Rücklaufverhältnis von zurückfließendem Kondensat zu verdampfter Salzsäure auf einen Wert zwischen 1:5 und 1:20 eingestellt wird. Durch dieses Merkmal wird erreicht, daß die Aluminiumfluoride so weit von der Oberfläche der Zeolithe entfernt werden, daß es nicht zu einer Veränderung der Reinigungsleistung des Verfahrens kommt. Andererseits wird ein sehr großer Anteil der gereinigten Salzsäure als Kondensat abgeführt, was die Wirtschaftlichkeit des erfindungsgemäßen Verfahrens positiv beeinflußt.

Schließlich ist nach der Erfindung vorgesehen, daß als mit HF verunreinigte Salzsäure die bei der Abgasreinigung anfallende Salzsäure verwendet wird, denn hierdurch ist es möglich, die Wirtschaftlichkeit der Müllverbrennungsanlagen zu steigern, da die gereinigte Salzsäure als Wertstoff wiederverwendet werden kann.

Der Gegenstand der Erfindung wird nachfolgend anhand der Zeichnung näher erläutert. Es zeigen:
- Fig. 1: Verfahren zur Herstellung einer Salzsäure mit einem HCl-Gehalt von ca. 20 Gew.-%,
- Fig. 2: Verfahren zur Herstellung einer Salzsäure mit einem HCl-Gehalt von ca. 30 Gew.-%.

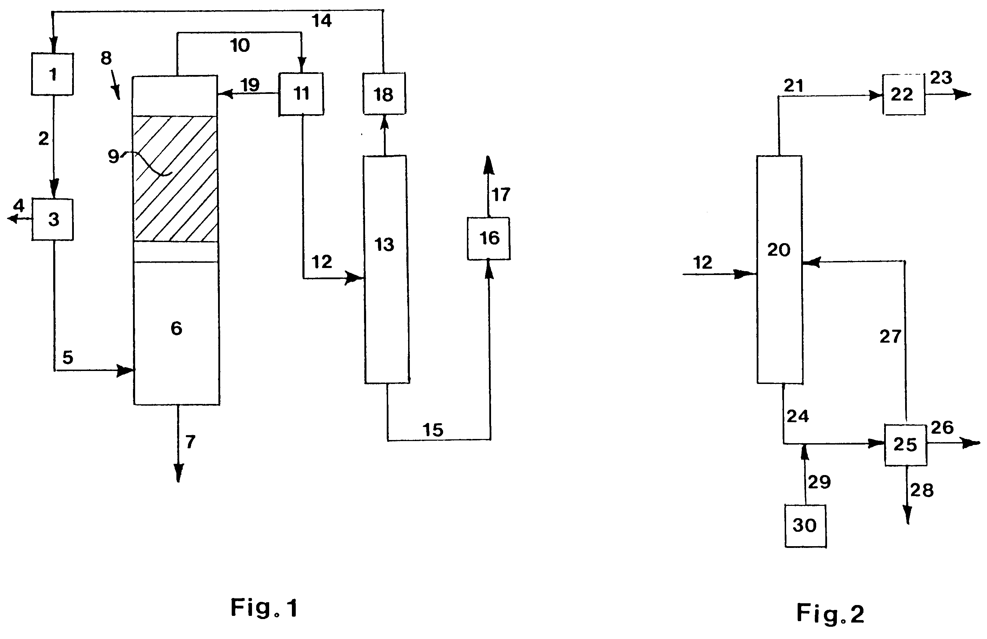

Aus der ersten Waschstufe (1) einer Müllverbrennungsanlage, in der aus dem Abgas der Müllverbrennungsanlage durch saure Wäsche mit Wasser HCl, HF, Staubteilchen und Schwermetallverbindungen ausgewaschen werden, gelangt die verunreinigte Salzsäure gemäß Fig. 1 über die Leitung (2) kontinuierlich in das Filter (3), in dem die Feststoffteilchen weitgehend abgetrennt und über die Leitung (4) aus dem Filter (3) entnommen werden. Die von Feststoffen befreite verunreinigte Salzsäure, die einen HCl-Gehalt von ca. 12 Gew.-% und einen HF-Gehalt von 0,05 bis 0,1 Gew.-% hat, wird über die Leitung (5) kontinuierlich in den Verdampfer (6) geführt, wo Wasser, HCl und HF bei einer Temperatur von ca. 103°C verdampft werden. Die verdampfte Salzsäure tritt aus dem Verdampfer (6) unmittelbar in den oberhalb des Verdampfers (6) angeordneten Festbettreaktor (8) ein, in dem ein Festbett (9) angeordnet ist, das eine Höhe von 3 m hat und dessen Festbett-Teilchen einen mittleren Durchmesser d₅₀ von 1 cm aufweisen.

Die dampfförmige Salzsäure verläßt den Festbettreaktor (8) über die Leitung (10). Aus dem Sumpf des Verdampfers (6) wird kontinuierlich ein Teilstrom über die Leitung (7) abgeführt, der die im Festbett (9) gebildeten und durch den Salzsäure-Rückfluß ausgewaschenen Fluorverbindungen des Aluminiums in gelöster Form enthält. Außerdem werden mit dem in der Leitung (7) geführten Teilstrom die gelösten Schwermetallverbindungen aus dem Verfahrenskreislauf ausgetragen.

Die in der Leitung (10) geführte HF-freie, dampfförmige Salzsäure gelangt in den Kondensator (11), wo sie kondensiert wird. Ein kleinerer Teil des Kondensats fließt über die Leitung (19) in den Festbettreaktor (8) und anschließend in den Verdampfer (6) zurück, während der größere Teil des Kondensats aus dem Kondensator (11) in die Leitung (12) gelangt, wobei das Rücklaufverhältnis 1:15 beträgt. Der größere Teil der kondensierten Salzsäure wird über die Leitung (12) in die Rektifikationskolonne (13) eingebracht, an deren Kopf eine dampfförmige verdünnte Salzsäure (Brüden) und aus deren Sumpf das flüssige Salzsäure-Azeotrop entnommen wird. Die HCl-haltigen Brüden werden nach Kondensation im Kondensator (18) über die Leitung (14) in die erste Waschstufe (1) zurückgeführt. Das flüssige Azeotrop gelangt über die Leitung (15) in den Kühler (16). Die gereinigte Salzsäure verläßt den Kühler (16) über die Leitung (17) und kann einer Wiederverwendung zugeführt werden. Sie hat einen HCl-Gehalt von ca. 20 Gew.-% sowie einen HF-Gehalt von < 5 mg/l.

Gemäß Fig. 2 wird die entsprechend dem in Fig. 1 dargestellten Verfahren mit den Verfahrensschritten (1) bis (11) erzeugte kondensierte Salzsäure über die Leitung (12) in die Rektifikationskolonne (20) eingebracht, an deren Kopf eine dampfförmige konzentrierte Salzsäure entnommen wird. Die dampfförmige konzentrierte Salzsäure gelangt über die Leitung (21) in den Kondensator (22), wo sie kondensiert und abgekühlt wird. Die konzentrierte Salzsäure verläßt den Kondensator (22) über die Leitung (23) und kann einer Wiederverwendung zugeführt werden. Sie hat einen HCl-Gehalt von ca. 30 Gew.-% sowie einen HF-Gehalt von < 5 mg/l.

Dem Sumpf der Rektifikationskolonne (20) wird über die Leitung (24) eine CaCl₂-Lösung entnommen, die ca. 40 Gew.-% CaCl₂ und geringe Reste Salzsäure enthält. Diese CaCl₂-Lösung wird über die Leitung (24) in den Verdampfer (25) gefördert. Im Verdampfer (25) wird insbesondere Wasser verdampft, das über die Leitung (26) nach Kondensation in die erste Waschstufe (1) zurückgeführt wird. Die im Verdampfer (25) anfallende aufkonzentrierte CaCl₂-Lösung gelangt über die Leitung (27) in die Rektifikationskolonne (20). Die Aufkonzentrierung der CaCl₂-Lösung im Verdampfer (25) erfolgt so weit, daß die in die Rektifikationskolonne (20) eingeführte CaCl₂-Lösung eine CaCl₂-Konzentration von ca. 50 Gew.-% hat. Die CaCl₂-Lösung entzieht der verdünnten Salzsäure in der Rektifikationskolonne (20) Wasser, so daß in der Kolonne eine Aufkonzentrierung der Salzsäure auf einen HCl-Gehalt von ca. 30 Gew.-% erreicht wird. Die Kreislaufführung der CaCl₂-Lösung wird in vorteilhafter Weise dadurch ermöglicht, daß die der Rektifikationskolonne (20) zugeführte verdünnte Salzsäure kein HF enthält und es dadurch in der Kolonne nicht zur Ausfällung von CaF₂ kommt. Ein Teilstrom verbrauchter CaCl₂-Lösung kann über die Leitung (28) aus dem System ausgeschleust und durch frische CaCl₂-Lösung ersetzt werden, die dem Verdampfer (25) über die Leitung (29) aus dem Tank (30) zugeführt wird. Die Aufkonzentrierung der Salzsäure kann erfindungsgemäß auch auf HCl-Konzentrationen > 30 Gew.-% erfolgen.

## Patentansprüche

1. Verfahren zur Abtrennung von HF aus Salzsäure, dadurch gekennzeichnet, daß die mit HF verunreinigte Salzsäure verdampft und die verdampfte Salzsäure durch einen Festbettreaktor geleitet wird, dessen Festbett aus mindestens einem natürlich vorkommenden Zeolith besteht, und daß die aus dem Festbettreaktor austretende dampfförmige Salzsäure kondensiert wird und ein Teilstrom des Kondensats in den Festbettreaktor und anschließend in die zu verdampfende verunreinigte Salzsäure zurückfließt.

2. Verfahren nach Anspruch 1, dadurch gekennzeichnet, daß mit HF verunreinigte Salzsäure, die einen HCl-Gehalt von 6 bis 19 Gew.-% hat, nach ihrer Verdampfung und Kondensation durch Destillation und/oder Rektifikation bis zum Azeotrop mit einem HCl-Gehalt von ca. 20 Gew.-% aufkonzentriert wird.

3. Verfahren nach Anspruch 1, dadurch gekennzeichnet, daß mit HF verunreinigte Salzsäure, die einen HCl-Gehalt von 6 bis 19 Gew.-% hat, nach ihrer Verdampfung und Kondensation durch Destillation und/oder Rektifikation in Gegenwart einer ca. 30 bis 60 Gew.-% CaCl₂ enthaltenden Lösung bis zu einer Salzsäure mit einem HCl-Gehalt > 30 Gew.-% aufkonzentriert wird.

4. Verfahren nach den Ansprüchen 1 bis 3, dadurch gekennzeichnet, daß das Festbett eine Höhe von 1 bis 5 m hat und die Festbett-Teilchen einen mittleren Durchmesser d₅₀ von 0,5 bis 2 cm aufweisen.

5. Verfahren nach den Ansprüchen 1 bis 4, dadurch gekennzeichnet, daß als natürlich vorkommender Zeolith Mordenit, Clinoptilolit, Chabasit oder ein aus zwei oder drei dieser Stoffe bestehendes Gemisch verwendet wird.

6. Verfahren nach den Ansprüchen 1 bis 5, dadurch gekennzeichnet, daß im Festbettreaktor das Rücklaufverhältnis von zurückfließendem Kondensat zu verdampfter Salzsäure auf einen Wert zwischen 1:5 und 1:20 eingestellt wird.

7. Verfahren nach den Ansprüchen 1 bis 6, dadurch gekennzeichnet, daß als mit HF verunreinigte Salzsäure die bei der Abgasreinigung anfallende Salzsäure verwendet wird.
